# EUROPÄISCHE PATENTSCHRIFT

(11) **EP 0 533 650 B1**
(45) Veröffentlichungstag und Bekanntmachung des Hinweises auf die Patenterteilung: **28.12.1994**
(21) Anmeldenummer: 92890193.3
(22) Anmeldetag: 15.09.1992
(51) Int. Cl.: B62B 5/02

(54) **Sackkarren**
Sack Truck
Diable

(30) Priorität: 16.09.1991 AT 1846/91
(43) Veröffentlichungstag der Anmeldung: 24.03.1993
(73) Patentinhaber: Bierma, Jochum Ing., A-4040 Linz (AT)
(72) Erfinder: Bierma, Jochum Ing., A-4040 Linz (AT)
(74) Vertreter: Hübscher, Heiner, Dipl.-Ing.

(56) Entgegenhaltungen:
- DE-A- 1 505 834
- DE-A- 2 230 708
- FR-A- 1 391 269

## Beschreibung

Die Erfindung bezieht sich auf einen Sackkarren mit einem Handgriffe zur Handhabung aufweisenden, bodenseits über ein Laufradpaar abgestützten Tragrahmen und einer Hebevorrichtung zum Treppensteigen, die einen motorbetriebenen, zur Laufradachse parallelachsigen Kurbeltrieb und ein Stützradpaar umfaßt.

Es gibt bereits Sackkarren, die mit einem Kurbeltrieb und einem Stützradpaar als Treppensteighilfe ausgerüstet sind, wobei allerdings die Laufräder an den Kurbelarmen sitzen und die am Tragrahmen bremsbar gelagerten Stützräder lediglich als zusätzliche Abstützung und vor allem als Bewegungsbremse bei der Überwindung der Stufen dienen. Durch die Bewegung der Kurbelarme kommt es dabei während des Treppensteigens bei stehenden Laufrädern zu einer Relativverschiebung des Tragrahmens gegenüber der Laufradachse und damit zu einer Schwerpunktsverlagerung, was die Handhabung des Karrens erschwert und den Lasttransport verunsichert. Darüber hinaus muß durch eine geeignete Schräghaltung des Rahmens dafür gesorgt werden, daß beim Überwinden der Stufe durch ein Verschwenken des Tragrahmens über die Kurbelarme die Stützräder tatsächlich ordnungsgemäß auf der nächsten Stufe aufsetzen, da es sonst zu einem Wegdrücken des Karrens von der Stufenkante und zu einer unangenehmen Absturzgefahr kommt. Nicht zuletzt wird durch die Abstützung des Karrens über die an den Kurbelarmen lagernden Laufräder der Kurbeltrieb ständig belastet, wodurch sich die Störanfälligkeit erhöht, und die Schwenkbarkeit der Laufräder gegenüber dem Tragrahmen führt zu größeren Abmessungen des Karrens, der dadurch im Vergleich zu üblichen Sackkarren mehr Platz zur Unterbringung beansprucht und auch eine Umstellung beim Hantieren erfordert.

Der Erfindung liegt daher die Aufgabe zugrunde, diese Mangel zu beseitigen und einen Sackkarren der eingangs geschilderten Art zu schaffen, der verhältnismäßig einfach aufgebaut ist, sich im wesentlichen wie ein üblicher Sackkarren unterbringen und handhaben läßt und vor allem mit einer geschickt und sicher zu betätigenden Treppensteighilfe ausgerüstet ist.

Die Erfindung löst diese Aufgabe dadurch, daß ein Stützrahmen das Stützradpaar od. dgl. aufnimmt, der am Kurbelarm des in Richtung zu den Handgriffen mit Abstand von der Laufradachse angeordneten Kurbeltriebes angelenkt ist und mittels eines im Bereich zwischen Stützradachse und Anlenkachse vorgesehenen Führungsgliedes in eine tragrahmenfeste, sich im wesentlichen in Richtung einer Verbindung zwischen Kurbeltrieb- und Laufradachse erstreckende Kulissenführung eingreift. Der Sackkarren besitzt daher einen durchaus üblichen Grundaufbau, der lediglich durch eine rationelle Hebevorrichtung ergänzt ist, was auch eine nachtragliche Bestückung von Sackkarren mit solchen Hebevorrichtungen erlaubt. Die Handhabung und die Abmessungen des Sackkarrens bleiben im wesentlichen unverändert, so daß der stufengängige Sackkarren problemlos statt eines üblichen einfachen Sackkarrens untergebracht und ohne Umstellung auch verwendet werden kann. Durch Ein- und Ausschalten bzw. Umschalten des Antriebsmotors läßt sich der Kurbeltrieb in die eine oder andere Richtung bewegen, so daß aufgrund des Zusammenwirkens von Stützrahmen, Kurbeltrieb und Kulissenführung die am freien Stützrahmenende angeordneten Stützräder eine vor- oder rückwärts ausholende Stelzbewegung ausführen, wodurch beim Hinauffahren über Treppen der Tragrahmen mit den Laufrädern über die nun am Boden aufsetzenden Stützräder und den Stützrahmen angehoben und der nächsthöheren Stufe übergeben wird oder beim Abwärtsfahren die Stützräder nach unten auf die nächsttiefere Stufe vorgreifen und den Tragrahmen mit den Laufrädern nachfolgend absenken. Dabei wird durch die Überlagerung der Kurbel- und Führungsbewegungen ein sauberes Übergreifen der Stufenkanten erreicht und es kommt zu einer einwandfreien Abwicklung der Karrenbewegung relativ zum Stufenprofil. Der Lastschwerpunkt bleibt auch während des Stufenfahrens stets im Bereich über der Laufradachse, so daß ein sicheres und gefahrloses Hantieren der Last gewährleistet ist.

Weist der Stützrahmen oberhalb des Stützradpaares eine Leiteinrichtung, vorzugsweise ein Leitradpaar, auf, wird der Gefahr beim Übergreifen einer Stufenkante diese durch den Stützrahmen zu beschädigen vorgebeugt und die Hebe- bzw. Senkbewegung des Karrens läßt sich genauer an die Stufung anpassen. Als Leiteinrichtung eignen sich am besten Leiträder, die über die Stufenkante bzw. an den Stufenstirnflächen abrollen, aber es sind auch Gleitkufen od. dgl. durchaus möglich.

Besonders günstig ist es, wenn die Kulissenführung einen gekrümmten Verlauf besitzt, der von einer geraden Verbindung zwischen Kurbeltrieb- und Laufradachse im Bereich vor der Laufradachse nach oben und im über die Laufradachse hinausragenden Bereich nach unten abweicht. Durch diesen Bogenverlauf der Kulissenführung wird die übergreifende Stelzbewegung des Stützrahmens und seiner Stützräder eng an die Stufenprofilierung angepaßt und ein unnötiges Überheben des Karrens über die Stufenkante hinaus beim Stufensteigen vermieden.

Eine weitere Verbesserung des Stufensteigverhaltens ergibt sich, wenn der Stützrahmen einen in Seitenansicht nach unten abgewinkelten Fußteil zur Aufnahme des Stützradpaares und der Leiteinrichtung bildet, so daß sich beim Einsatz der Hebevorrichtung die Stützräder und die Leiteinrichtung gut in die Stufenwinkel einführen und sich beim Heben bzw. Senken eine gute Karrenabstützung ergibt.

Gemäß einer günstigen Ausgestaltung der Erfindung ist der Stützrahmen mit dem Stützradpaar in Draufsicht innerhalb der Längsholme des Tragrahmens angeordnet, wobei die Laufräder außen auf einzelnen Achsstummeln sitzen und die Stützräder auf einer durchgehenden Achse lagern. Durch dieses Ineinanderschachteln von Tragrahmen und Stützrahmen entsteht eine kompakte Konstruktion, bei der allerdings statt der bisher üblichen durchgehenden Laufradachse nun die durchgehende Stützradachse die für ein zweckmäßiges Handhaben des Karrens erforderliche Fußstütze zum Gegenhalten beim Auf- oder Abkippen od. dgl. bietet.

Steht der Kurbeltrieb über einen Kettentrieb mit dem Antriebsmotor in Verbindung, wobei zwischen der Kurbelwelle des Kurbeltriebes und dem drehbar auf der Kurbelwelle sitzenden Abtriebsrad des Kettentriebes eine Blattfedern zur Drehmomentübertragung aufweisende Kupplung vorgesehen ist, kommt es nicht nur zu einem leistungsstarken Antrieb für die Hebevorrichtung, sondern die Antriebsverbindung ist durch die Blattfedern der Kupplung auch mit einer Art Dämpfer und wegen der Nachgiebigkeit der Federn bei Überlast mit einem Beschädigungsschutz ausgestattet.

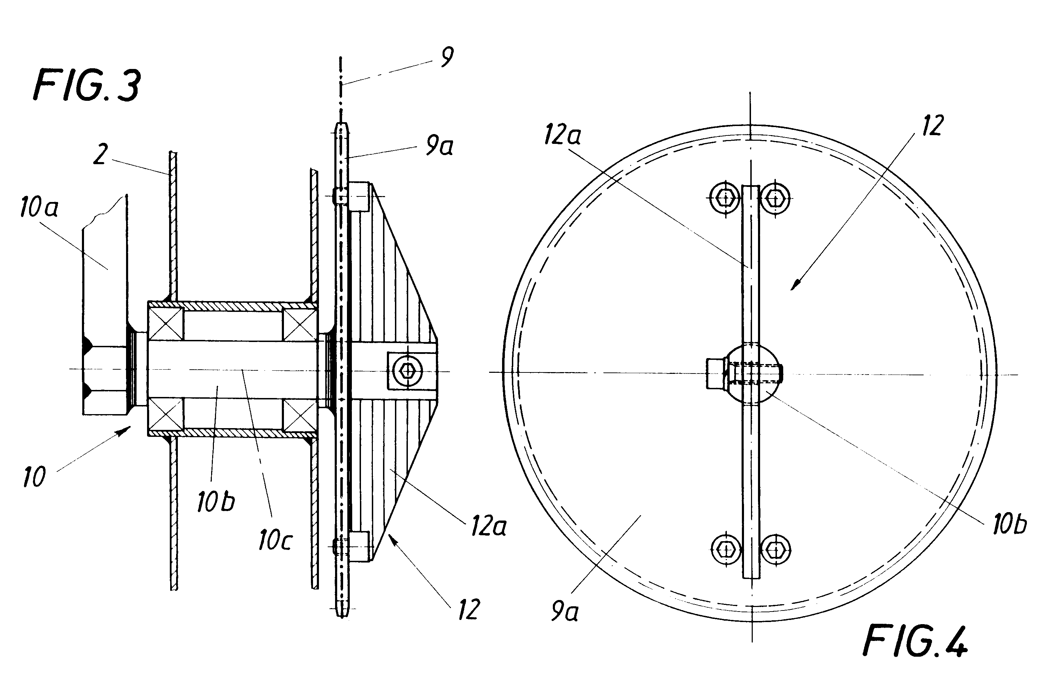

In der Zeichnung ist der Erfindungsgegenstand anhand eines Ausführungsbeispieles rein schematisch veranschaulicht, und zwar zeigen Fig. 1 einen erfindungsgemäßen Sackkarren in Seitenansicht, wobei der Übersicht halber die in Sichtrichtung vorderen Längsholme des Tragrahmens weggelassen sind, Fig. 2 den Sackkarren in Untersicht, die Fig. 3 und 4 ein Detail des Antriebes im Schnitt bzw. in Stirnansicht größeren Maßstabes und die Fig. 5 und 6 Bewegungsschemata eines Aufwärts- bzw. Abwärtsfahrens des Sackkarrens über eine Treppe.

Ein stufengängiger Sackkarren 1 besteht aus einem Tragrahmen 2, der Handgriffe 3 zur Handhabung und Laufräder 4 zur bodenseitigen Abstützung aufweist. Die Laufräder 4 lagern auf einzelnen auswärtsgerichteten Achsstummeln 5 der Längsholme 2a des Tragrahmens 2, so daß innerhalb der Längsholme 2a Platz für die Anordnung einer Hebevorrichtung 6 zum Treppensteigen bleibt. Diese Hebevorrichtung 6 weist einen über eine nur angedeutete Batterie 7 gespeisten Antriebsmotor 8 auf, der über einen Kettentrieb 9 einen Kurbeltrieb 10 wahlweise in die eine oder andere Richtung antreibt. Dazu sitzt das Abtriebsrad 9a des Kettentriebes 9 drehbar auf der den Kurbelarm 10a tragenden Kurbelwelle 10b, deren Achse 10c zur Laufradachse 11 parallel, aber mit Abstand in Richtung zu den Handgriffen 3 hin versetzt verläuft, und eine Kupplung 12 mit zwischen dem Abtriebsrad 9a und der Kurbelwelle 10b vorgesehenen Blattfedern 12a zur Drehmomentübertragung sorgt für die Antriebsverbindung von Ketten-und Kurbeltrieb 9, 10. Am Kurbelarm 10a des Kurbeltriebes 10 ist ein Stützrahmen 13 angelenkt, der an seinem freien unteren Ende ein Paar Stützräder 14 aufnimmt. Das Stützradpaar 14 sitzt auf einer gemeinsamen durchgehenden Achse 15 des Stützrahmens 13, der zur Aufnahme dieses Stützradpaares 14 einen in Seitenansicht nach unten abgewinkelten Fußteil 13a bildet. Etwa mittig zwischen der Stützradachse 15 und der Anlenkachse 16 des Stützrahmens 13 am Kurbelarm 10a ist der Stützrahmen 13 mit Führungsrollen 17 versehen, die in eine tragrahmenfeste Kulissenführung 18 eingreifen. Diese Kulissenführung 18 besitzt einen gekrümmten Verlauf, der von einer geraden Verbindung zwischen Kurbeltrieb- und Laufradachse 10c,11 einen nach oben abweichenden Abschnitt 18a und im über die Laufradachse 11 hinausragenden Bereich einen nach unten gekrümmten Abschnitt 18b umfaßt, womit sich bei Drehung des Kurbeltriebes 10 eine entsprechend kulissengesteuerte, sich aus Hub- und Schwenkbewegungskomponenten zusammensetzende Bewegung des Stützrahmens 13 mit seinen Stützrädern 14 ergibt. Eine Leitvorrichtung, vorzugsweise ein Paar Leiträder 19, die oberhalb der Stützräder 14 am Fußteil 13a des Stützrahmens 13 gelagert sind, vervollständigen die Hebevorrichtung 6.

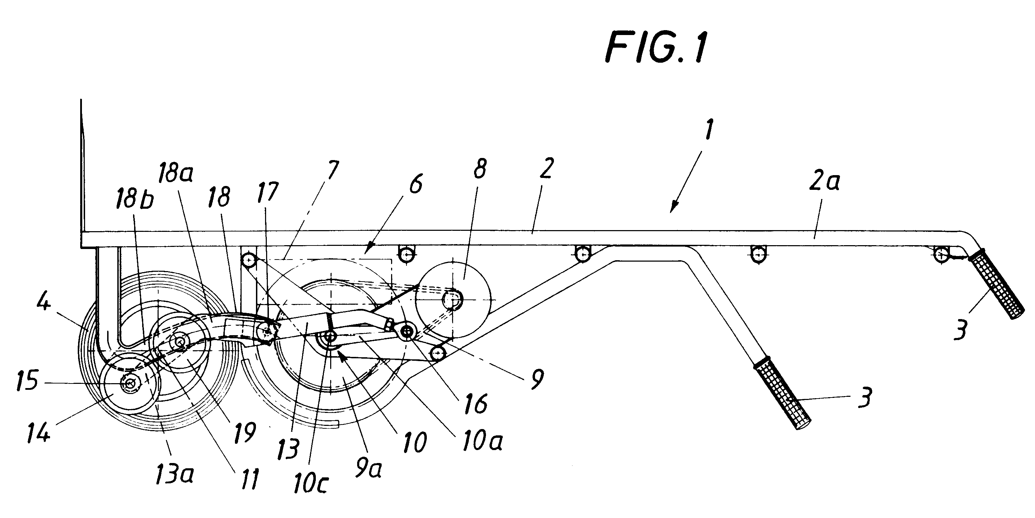

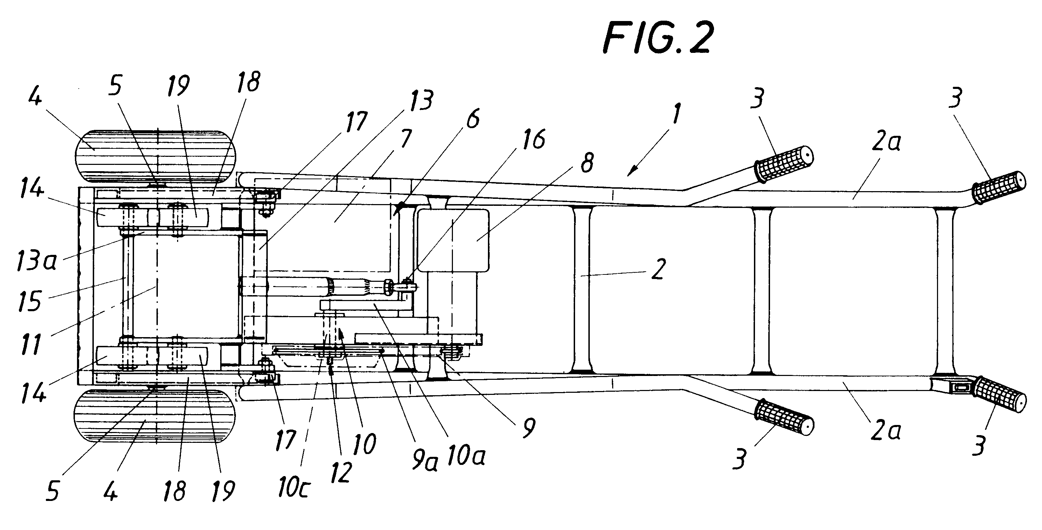

In Ausgangsstellung der Hebevorrichtung 6 befindet sich der Kurbeltrieb 10 hinsichtlich des in der Kulissenführung 17 geführten Stützrahmens 13 im Bereich seines oberen Totpunktes. Die Stützräder 14 sind eingezogen und die Hebevorrichtung 6 außer Funktion (Fig. 1 und 2).

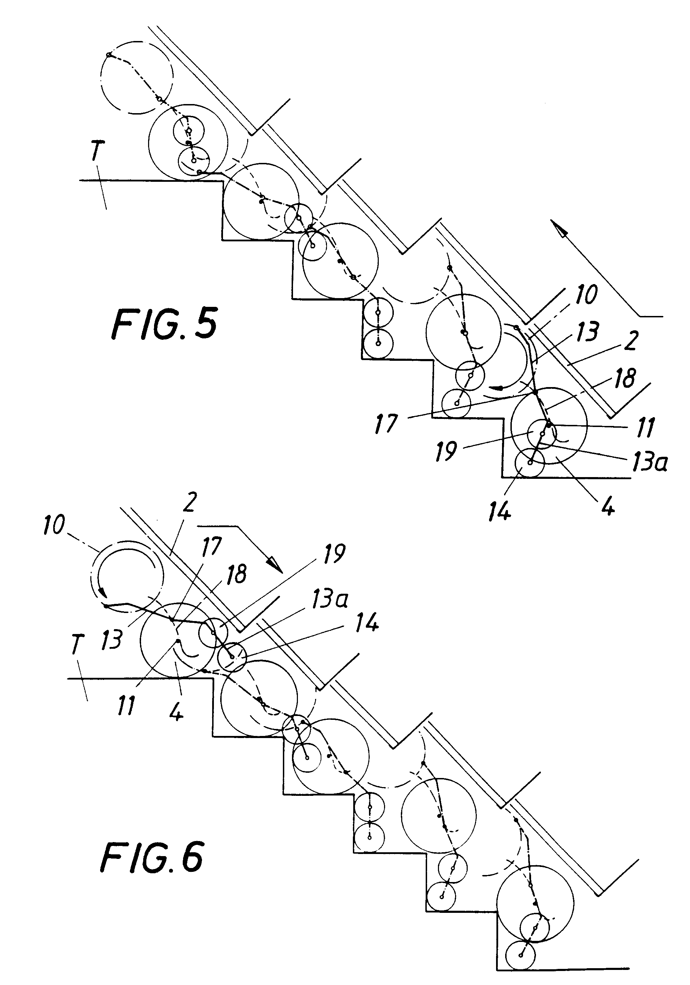

Soll nun der Sackkarren 1 aufwärts über eine Treppe T bewegt werden, fährt der Karren 1 rückwärts bis zur 1. Stufe heran und der Kurbeltrieb 10 wird gemäß Darstellung nach Fig. 5 im Uhrzeigersinn angetrieben. Damit schwenkt, wie in Fig. 5 schrittweise veranschaulicht, der Stützrahmen 13 nach unten aus, bis das Stützradpaar 14 am Boden aufsetzt und dann eine Weiterbewegung ein Anheben des Tragrahmens 2 samt den Laufrädern 4 bewirkt. Es kommt zu einem die Stufenkanten umrundenden Anheben des Karrens, bis dessen Laufräder 4 auf der nächsten Stufe aufsetzen und die Last wieder übernehmen. Beim Übergeben der Last von den Stützrädern 14 auf die Laufräder 4 legen sich die Leiträder 19 an den Stufenstirnflächen an und bringen so eine sanfte, kantenschonende Abwickelbewegung mit sich. Eine Weiterdrehung des Kurbeltriebes 10 hebt die Stützräder 14 von der unteren Stufe ab und bringt sie über die Ausgangslage wieder zurück in die nächste Hebeposition, so daß sich der Bewegungsablauf von Stufe zu Stufe fortsetzt und die Treppe ohne Probleme überwunden werden kann.

Beim Abwärtsfahren über die Treppe T erfolgt, wie in Fig. 6 schrittweise veranschaulicht, der Antrieb des Kurbeltriebes 10 gegen den Uhrzeigersinn, so daß die Stützräder 14 von ihrer Ausgangslage vorwärts über die Stufenkante hinausgreifen und gegebenenfalls unter Abstützung über die Leiträder 19 an der Stufenkante auf der nächsttieferen Stufe aufsetzen, dann über den Stützrahmen 13 den Tragrahmen 2 mit den Laufrädern 4 anheben und bis zum Aufsetzen der Laufräder 4 auf dieser Stufe vorschwenken und absenken. Auch hier wiederholt sich diese Ablaufbewegung von Stufe zu Stufe bis zum unteren Treppenende.

Der erfindungsgemäße Sackkarren 1 zeichnet sich durch seine einem üblichen Karren entsprechenden Abmessungen und seine mit diesem Karren vergleichbare Hantierbarkeit aus. Seine Hebevorrichtung 6 bringt dabei eine geschickt und leicht zu betätigende, sichere Treppensteighilfe mit sich.

## Patentansprüche

1. Sackkarren (1), mit einem Handgriffe (3) zur Handhabung aufweisenden, bodenseits über ein Laufradpaar abgestützten Tragrahmen (2) und einer Hebevorrichtung (6) zum Treppensteigen, die einen ein Stützradpaar (14) aufnehmenden, mittels eines Stelltriebes um eine zur Laufradachse (11) parallele Drehachse schwenkverstellbaren Stützrahmen (13) umfaßt, dadurch gekennzeichnet, daß als Stelltrieb ein in Richtung zu den Handgriffen (3) mit Abstand von der Laufradachse (11) angeordneter Kurbeltrieb (10) vorgesehen ist und der am Kurbelarm (10a) des Kurbeltriebes (10) angelenkte Stützrahmen (13) über ein im Bereich zwischen Stützradachse (15) und Anlenkachse (16) sitzendes Führungsglied (17) in eine tragrahmenfeste, sich im wesentlichen in Richtung einer Verbindung zwischen Kurbeltrieb- und Laufradachse (10c, 11) erstreckende Kulissenführung (18) eingreift.

2. Sackkarren nach Anspruch 1, dadurch gekennzeichnet, daß der Stützrahmen (13) oberhalb des Stützradpaares (14) eine Leiteinrichtung, vorzugsweise ein Leitradpaar (19), aufweist.

3. Sackkarren nach Anspruch 1 oder 2, dadurch gekennzeichnet, daß die Kulissenführung (18) einen gekrümmten Verlauf besitzt, der von einer geraden Verbindung zwischen Kurbeltrieb- und Laufradachse (10c,11) im Bereich vor der Laufradachse (11) nach oben und im über die Laufradachse (11) hinausragenden Bereich nach unten (18b) abweicht.

4. Sackkarren nach einem der Ansprüche 1 - 3, dadurch gekennzeichnet, daß der Stützrahmen (13) einen in Seitenansicht nach unten abgewinkelten Fußteil (13a) zur Aufnahme des Stützradpaares (14) und der Leiteinrichtung (19) bildet.

5. Sackkarren nach einem der Ansprüche 1 - 4, dadurch gekennzeichnet, daß der Kurbeltrieb (10) über einen Kettentrieb (9) mit dem Antriebsmotor (8) in Verbindung steht, wobei zwischen der Kurbelwelle (10b) des Kurbeltriebes (10) und dem drehbar auf der Kurbelwelle sitzenden Abtriebsrad (9a) des Kettentriebes (9) eine Blattfedern (12a) zur Drehmomentübertragung aufweisende Kupplung (12) vorgesehen ist.

## Claims

1. A sack truck (1), with a carrier frame (2) having handles (3) for handling and supported on a pair of running wheels adjacent the ground, and a lifting means (6) for climbing stairs, the lifting means comprising a support frame (13) receiving a pair of support wheels (14) and pivotable by means of an actuator about a rotational axis parallel to the running wheel axis (11), characterised in that the actuator comprises a crank drive (10) disposed at a distance from the running wheel axis (11) in the direction of the handles (3) and the support frame (13) articulated on the crank arm (10a) of the crank drive (10) engages, via a guide element (17) disposed in the zone between the support wheel axis (15) and the articulation axis (16), in a slotted guide (18) fixed to the carrier frame and extending substantially in the direction of a connection between the crank drive axis and the running wheel axis (10c, 11).

2. A sack truck according to claim 1, characterised in that the support frame (13) has a guide means, preferably a pair of guide rollers (19), above the pair of support wheels (14).

3. A sack truck according to claim 1 or 2, characterised in that the slotted guide (18) has a curved configuration which departs from a straight connection between the crank drive axis and the running wheel axis (10c, 11) upwardly in the zone in front of the running wheel axis (11) and downwardly (18b) in the zone extending beyond the running wheel axis (11).

4. A sack truck according to any one of claims 1 to 3, characterised in that the support frame (13) forms a base part (13a) which is bent down at an angle in side elevation to receive the pair of support wheels (14) and the guide means (19).

5. A sack truck according to any one of claims 1 to 4, characterised in that the crank drive (10) is connected to the drive motor (8) via a chain drive (9), a coupling (12) which comprises leaf springs (12a) for torque transmission being provided between the crankshaft (10b) of the crank drive (10) and the output wheel (9a) of the chain drive (9) mounted rotatably on the crankshaft.

## Revendications

1. Diable (1) à sacs, avec un cadre-support (2) présentant des poignées (3) pour sa manipulation et soutenu côté fond par l'intermédiaire d'une paire (14) de roues de chariotage et avec un dispositif (6) de levage pour monter des escaliers, comprenant un cadre d'appui (13), recevant une paire de roues (14) d'appui et susceptible d'être réglé en pivotement au moyen d'un mécanisme de réglage, autour d'un axe de rotation parallèle à l'axe (11) de roue de chariotage (11),
caractérisé en ce qu'il est prévu, comme mécanisme de réglage, un mécanisme (10) à bielle disposé dans la direction des poignées (3), à distance de l'axe (11) de roue de chariotage et le cadre d'appui (13), articulé sur le bras de manivelle (10a) du mécanisme à bielle (10), s'engageant, par l'intermédiaire d'un organe de guidage (17) placé dans la zone située entre l'axe (15) de roue d'appui et l'axe d'articulation (16), dans un guidage (18) à coulisse fixe par rapport au cadre-support et s'étendant essentiellement en direction d'une liaison entre axe de mécanisme à bielle et axe de roue de chariotage (10c, 11).

2. Diable à sacs selon la revendication 1, caractérisé en ce que le cadre d'appui (13) présente, au-dessus de la paire (14) de roues d'appui, un dispositif directionnel, de préférence une paire (19) de roues directrices .

3. Diable à sacs selon la revendication 1 ou 2, caractérisé en ce que le guidage (18) à coulisse a une allure incurvée, qui partant d'une liaison rectiligne entre les axes de mécanisme à bielle et de roue de chariotage (10c, 11), s'éloigne vers le haut dans la zone située devant l'axe (11) de roue de chariotage, puis en direction du bas (18b) la zone surplombant l'axe (11) des roues de chariotage.

4. Diable à sacs selon l'une des revendications 1 à 3,
caractérisé en ce que le cadre d'appui (13) constitue une partie pied (13a) coudée vers le bas lorsqu'on l'observe en vue de côté, pour recevoir la paire (14) de roues d'appui et le dispositif directionnel (19).

5. Diable à sacs selon l'une des revendications 1 à 4,
caractérisé en ce que le mécanisme (10b) à bielle est relié, par l'intermédiaire d'une transmission à chaîne (9), au moteur d'entraînement (8), un ressort à lame (12a) étant prévu pour constituer un embrayage (12), permettant de transmettre un couple de rotation et installé entre le mécanisme à bielle de la transmission (10) à bielle et la roue d'entraînement (9a) montée à rotation sur l'arbre de manivelle de la transmission (9) à chaîne.
